# EUROPEAN PATENT APPLICATION

(11) **EP 4 613 913 A1**
(43) Date of publication of application: **10.09.2025**
(21) Application number: 25162201.5
(22) Date of filing: 06.03.2025
(51) Int. Cl.: C25B 15/00, C25B 9/05, C25B 9/73

(54) **ACTIVE TENSIONING FOR ELECTROLYZER STACKS**

(30) Priority: 06.03.2024 US 202418597366
(71) Applicant: Plug Power Inc., Latham, NY 12110 (US)
(72) Inventor: BECKMANN, Andrew, Latham , NY Latham (US); AINSLIE, Robert, Latham , NY (US)
(74) Representative: Buzzi, Notaro & Antonielli d'Oulx S.p.A.

(57) **Abstract**

A method for sealing an electrolyzer cell may include applying a sealant between two layers of an electrolyzer cell and compressing the two layers towards each other. The method may further include flowing fluid through a flow field in the electrolyzer cell. The method may further include controlling a temperature of the fluid flowing through the flow field and controlling a pressure applied to the sealant by the compressing the two layers towards each other. The method may further include conforming the sealant to the two layers.

## Description

### TECHNICAL FIELD

The present disclosure generally relates to the manufacturing of seals for electrolyzers and fuel cells. More specifically, the present disclosure relates to methods and systems of sealing assemblies during the manufacture of electrolyzer stacks.

### BACKGROUND

The drive for renewable energy solutions has resulted in substantial investments into water electrolysis or electrolyzer technologies. It is estimated that the electrolyzer market could increase to 300 GW over the next few decades, and power-to-gas is poised to become a multi-billion-dollar market for on-site electrolyzer systems. Electrolyzers use DC electricity to split water into hydrogen and oxygen. As one example, a proton electron membrane (PEM) electrolysis cell is a device which produces hydrogen and oxygen gas using DC electricity to electrochemically split water. A PEM cell contains an active area in which the presence of catalyst permits the reactions to take place. In the electrolysis cell, water enters the anode and is split into protons, electrons, and oxygen gas. The protons are conducted through the membrane, while the electrons pass through the electrical circuit. At the cathode, the protons and electrons recombine to form hydrogen gas.

Electrolyzers run at elevated temperatures and pressures and therefore must be sealed from the ambient environment. These operating conditions necessitate intensive processes to create functional electrolyzer cells, limiting the possible methods of manufacturing such electrolyzer cells.

Traditionally, electrolyzer stacks include a plurality of cells having plates or separators, structural frames and a sealant. The stacks, and/or the cell portions thereof, may be compressed together and heated to an optimal temperature, such as in an oven. The stacks or cells are then cooled down. However, once the stack or cells cools, the sealants may have insufficient pressure to maintain a seal between the adjacent portions (e.g., plates, separators and/or adjacent structural frames), especially at elevated temperatures. The stack and/or cells must then be resealed through recompressing and reheating. By repeating the heating and cooling cycle many times, the sealant eventually fully conforms to the electrolyzer stack, or the cell portions thereof, such that the seal may be maintained at operating temperatures.

The traditional process of cycling the separators and sealant(s) between high and low temperatures is slow, often requiring multiple hours per cycle over the course of multiple days. The traditional method is also labor intensive, requiring time and manpower to manually recompress the separators after each cycle. Thus, there is a need for improved methods and systems for manufacturing separator plates which have reduced time and labor investments when compared to traditional manufacturing processes.

### SUMMARY OF THE INVENTION

A method for sealing an electrolyzer cell may include applying a sealant between two layers of an electrolyzer cell and compressing the two layers towards each other. The method may further include flowing fluid through a flow field in the electrolyzer cell. The method may further include controlling a temperature of the fluid flowing through the flow field and controlling a pressure applied to the sealant by the compressing the two layers towards each other. The method may further include conforming the sealant to the two layers.

A system for sealing an electrolyzer cell may include a fluid pump releasably connectable to a flow field of an electrolyzer cell. The electrolyzer cell may include two layers having a sealant therebetween, and the fluid pump may be configured to flow fluid through the flow field. The system may further include a thermal controller configured to control a temperature of the fluid flowed through the flow field and a tensioning device releasably connectable to the electrolyzer cell. The tensioning device may be configured to compress the two layers toward each other while the fluid flows through the flow field and the temperature of the fluid is controlled to conform the sealant to the two layers.

### BRIEF DESCRIPTION OF THE DRAWINGS

The accompanying drawings, which are incorporated in and constitute a part of the specification, illustrate embodiments of the disclosure and together with the detailed description herein, serve to explain the principles of the disclosure. The drawings are thus only for purposes of illustrating preferred embodiments and are not to be construed as limiting the disclosure.
**FIG. 1** depicts an exploded view of an internal subassembly of an electrolyzer stack in accordance with an aspect of the present disclosure;
**FIG. 2** depicts a schematic view of the internal subassembly of FIG. 1 in accordance with an aspect of the present disclosure;
**FIG. 3** depicts a schematic view of a system of the present disclosure and an electrolyzer cell of an electrolyzer stack in accordance with an aspect of the present disclosure;
**FIG. 4** depicts a cross-sectional view of a portion of the system of FIG. 3 showing the internal subassembly of FIG. 1;
**FIG. 5** depicts a schematic view of the system of FIG. 3 during performance of a voltage test, in accordance with an aspect of the present disclosure;
**FIG. 6** depicts a schematic view of an electrolyzer stack including multiple instances of the electrolyzer cell of FIG. 3, in accordance with an aspect of the present disclosure;
**FIG. 7** depicts a flow chart of a method of the present disclosure for use in operating the system of FIG. 3, in accordance with an aspect of the present disclosure.

### DETAILED DESCRIPTION OF THE INVENTION

The present disclosure will be discussed hereinafter in detail in terms of various exemplary embodiments according to the present disclosure with reference to the accompanying drawings. In following the detailed description, numerous specific details are set forth in order to provide a thorough understanding of the present invention. It will be obvious, however, to those skilled in the art that the present disclosure may be practiced without these specific details. In other instances, well-known structures are not shown in detail in order to avoid unnecessarily obscuring the present disclosure.

Furthermore, there is no intention to be bound by any expressed or implied theory presented in the preceding technical field, background, brief summary, or the following detailed description. It is also understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

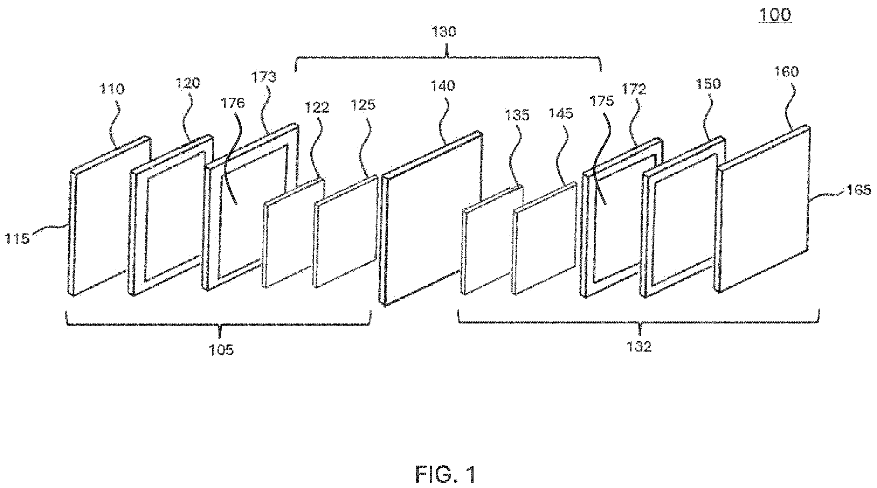

Referring to the drawings, wherein like reference numerals are used to indicate like or analogous components throughout the several views, and with particular reference to FIGS. 1-7, systems and methods and devices for manufacturing and sealing plates or separators of an electrolyzer stack are shown and discussed. The systems and methods and devices disclosed herein may include manufacturing, sealing and/or testing bipolar plates or separators prior to such plates being placed in operation in an electrolyzer stack.

FIG. 1 depicts various layers of an internal subassembly 100 of an electrolyzer cell of an electrolyzer stack including a cathode 105, a membrane electrode assembly (MEA) 130, and an anode 132. The cathode 105 may include a cathode flow plate 110 at a first outer end 115 of the subassembly 100 and a cathode flow plate seal 120 on the inner side thereof. The anode 132 may include an anode flow plate 160 at a second outer end 165 of the subassembly 100 and an anode flow plate seal 150 on the inner side thereof. The MEA 130 may be located between the cathode flow plate seal 120 of the cathode 105 and the anode flow plate seal 150 of the anode 132. In embodiments, there may further be a first structural frame 172 and/or flow field 175 located between the anode flow plate seal 150 and the MEA 130. Also in some embodiments, there may be a second structural frame 173 and/or flow field 176 located between the cathode flow plate seal 120 and the MEA 130. In embodiments, the first structural frame 172 may include and/or peripherally surround the first flow field 175, and the second structural frame 173 may include and/or peripherally surround the second flow field 176, as shown in FIG. 1. The detailed description below is written as if the structural frames 172, 173 include the flow fields 175, 176, but the present disclosure may be useful regardless of whether the structural frames 172, 173 are separate from or combined with the flow fields 175, 176, respectively.

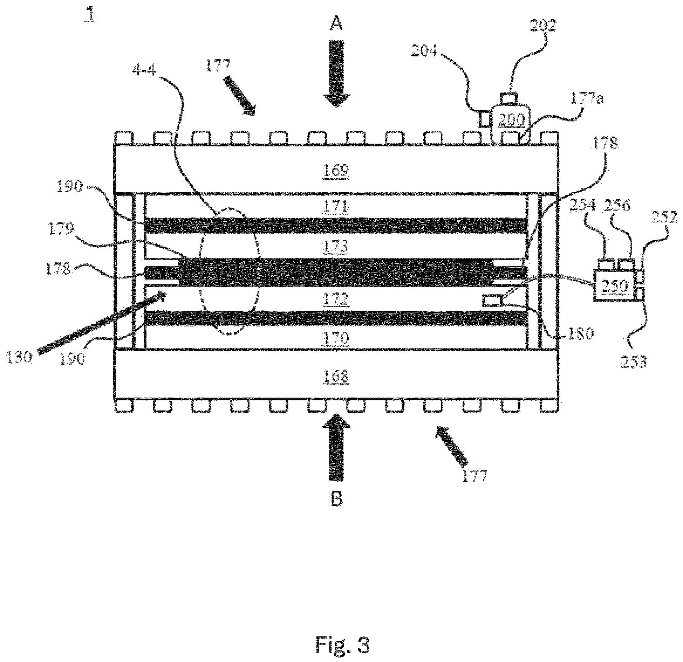

In some embodiments, there may be additional layers on one or both sides of the internal subassembly 100, such as non-repeating hardware. For example, the non-repeating hardware may include end plates 168, 169 (FIG. 3) on one or both sides of the internal assembly 100. The non-repeating hardware may also include fluid connection plates, load support and/or distribution hardware (e.g., plates and/or tie rods), electrical busbar connections and/or electrical insulation hardware. In some embodiments, the cathode flow plate seal 120, the anode flow plate seal 150, and/or another seal may be applied directly to the non-repeating hardware to seal the non-repeating hardware to the cathode flow plate 110 and/or the anode flow plate 160.

The cathode flow plate 110, the anode flow plate 160, and/or the structural frames 172, 173 and/or flow fields 175, 176 may be formed of a plastic, metal or another like material which one of ordinary skill would appreciate as being sufficient to allow for electrolysis to take place within a completed electrolyzer cell and/or electrolyzer stack. For example, the cathode flow plate 110, the anode flow plate 160, the structural frames 172, 173 and/or the flow fields 175, 176 may be made of materials which are known to be capable of withstanding the operating conditions under which an electrolyzer cell may be expected to operate.

The MEA 130 may include various layers including a membrane 140 (e.g., a polymer electrolyte membrane (PEM)) between a cathode side catalyst layer 125 of the cathode 105 and an anode side catalyst layer 135 of the anode 132. A cathode side gas diffusion layer (GDL) 122 of the cathode 105 may be located between the cathode side catalyst layer 125 and the cathode flow plate 110. An anode side gas diffusion layer 145 of the anode 132 may be located between the anode side catalyst layer 135 and the anode flow plate 160.

In embodiments, the cathode flow plate seal 120 may be received between the cathode flow plate 110 and the second structural frame 173, and the anode flow plate seal 150 may be received between the anode flow plate 160 and the first flow plate seal 172. In further embodiments, the cathode flow plate seal 120 and/or the anode flow plate seal 160 may be located between different layers of the internal subassembly 100 than those just described. In some embodiments, the cathode flow plate 110 and the second structural frame 173 may be a single component, in which case the cathode flow plate seal 120 may be located between the combined components (e.g., the combined cathode flow plate 110 and the second structural frame 173) and another layer of the internal subassembly 100. Similarly, in some embodiments, the anode flow plate 160 and the first structural frame 172 may be a single component, in which case the anode flow plate seal 150 may be located between the combined components (e.g., the anode flow plate 160 and the first structural frame 172) and another layer of the internal subassembly 100. In some embodiments, the cathode flow plate seal 120 and the anode flow plate seal 150 may be received in a channel of an inner side of the cathode flow plate 110 and the anode flow plate 160, respectively. In some embodiments, the cathode flow plate seal 120 and/or the anode flow plate seal 150 may be made of a thin plastic cut to a 2D profile of the mating interfaces of the layers to which they are to be applied.

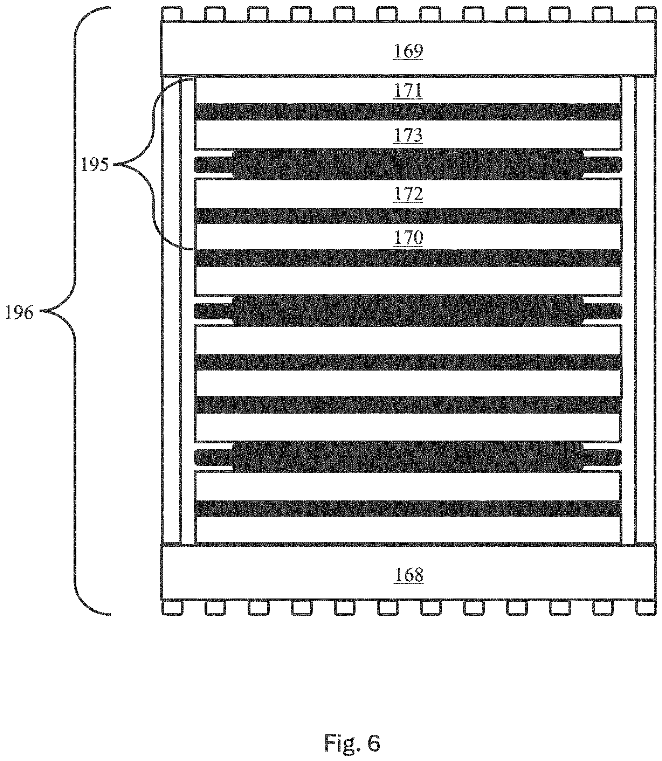

When assembled, the internal subassembly, the end plates 168, 169 and other non-repeating hardware, if any, may form a completed electrolyzer stack. Multiple electrolyzer cells (e.g., multiple of the internal subassembly 100) may be combined to form an electrolyzer stack (FIG. 6) to be used for electrolysis.

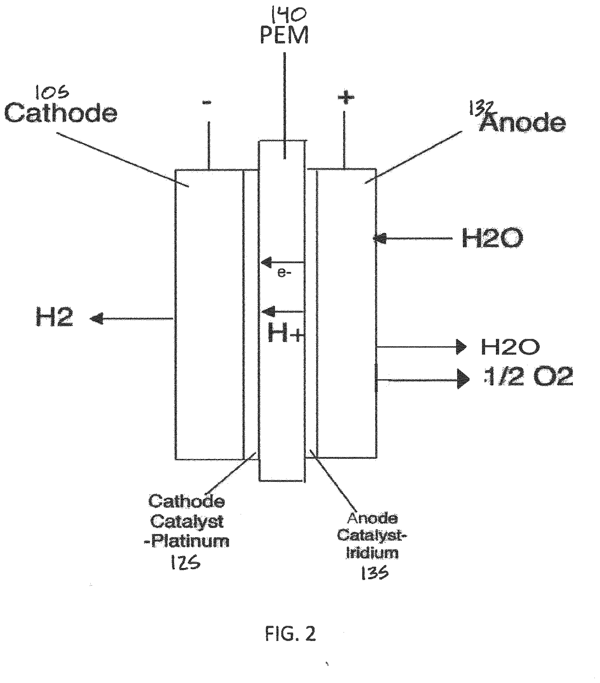

FIG. 2 depicts the internal subassembly 100 of the electrolyzer cell, including the cathode 105, the anode 132, and the membrane 140 (e.g., a PEM). The cathode 105 includes the cathode side catalyst layer 125 which may in some embodiments include a platinum catalyst. The anode 132 includes the anode side catalyst layer 135 which may in some embodiments include an iridium catalyst.

Fluid (e.g., water) may be flowed into the anode 132, which is then electrochemically split into oxygen gas and hydrogen ions. The hydrogen ions cross the membrane 140 and recombine with electrons to form hydrogen gas.

Turning to FIGS. 3-6, a system 1 of the present disclosure will now be described. With reference to FIG. 3, the system 1 for manufacturing and/or sealing plates or separators of an electrolyzer stack may receive two plates or separators 170, 171 (e.g., the cathode flow plate 110 and/or the anode flow plate 160) to be sealed to two structural frames and/or flow fields 172, 173 using a sealant 190 (e.g., the cathode flow plate seal 120 and/or the anode flow plate seal 150). As depicted in FIG. 3, the MEA 130 may be located between structural frames 172, 173 which may each include flow fields. In some embodiments, the flow fields 175, 176 may include lattice-like structures within and/or along which fluid may flow and/or traverse.

The MEA 130 is depicted vertically between and adjacent structural frames 172, 173 for convenience but portions of the MEA 130 may be received in interior open portions of structural frames 172, 173. For example, smaller outer portion(s) 178 of the MEA 130 may be received between and/or against outer portions of structural frames 172, 173 while inner larger portion(s) 179 of the MEA 130 may be received in, between and/or against the interior open portions of structural frames 172, 173. In embodiments, the inner larger portion(s) 179 may be received such that they are adjacent to and/or abutting one or both of the flow fields 175, 176, which may also be received in the interior open portions of the structural frames 172, 173 (FIG. 1).

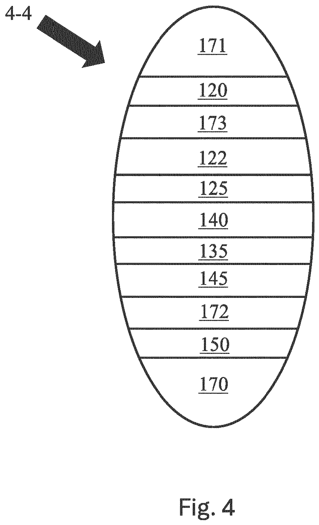

The sealant 190 may be located between the two separators 170, 171 and the two structural frames and/or flow fields 172, 173 and may be conformed thereto to bind the two separators 170, 171 to the two structural frames 172, 173 and/or other components of the internal subassembly 100 together by using the systems and methods described herein. For example, the sealant 190 may be located between a first separator 170 of the two separators 170, 171 and a first structural frame and/or flow field 172 of the two structural frames and/or flow fields 172, 173 and may be conformed thereto to bind the first separator 170 to the first structural frame 171. Similarly, the sealant 190 may (also) be located between a second separator 171 of the two separators 170, 171 and a second structural frame and/or flow field 172 of the two structural frames and/or flow fields 172, 173 and may be conformed thereto to bind the second separator 171 to the second structural frame 172. **In** embodiments, there may also be a sealant (e.g., the sealant 190 or a different sealant) between layers of the MEA 130. **In** further embodiments, the sealant 190 may be located between various other layers of the internal subassembly 100 described above, or between any such layer(s) and the non-repeating hardware (e.g., the end plates 168, 169), depending on the layout and/or operational requirements of a particular electrolyzer cell being manufactured. Components such as the cathode gas diffusion layer 122, the cathode side catalyst layer 125, the anode side catalyst layer 135, the anode side diffusion layer 145, among other layers and/or components, may be between the two separators 170, 171 during operation of the system as described below, as shown in FIG. 4. Once a sealant (e.g., the sealant 190) has been conformed through operation of the system as described below, the completed product may be an electrolyzer cell sufficient to be incorporated into an electrolyzer stack and to be used for electrolysis.

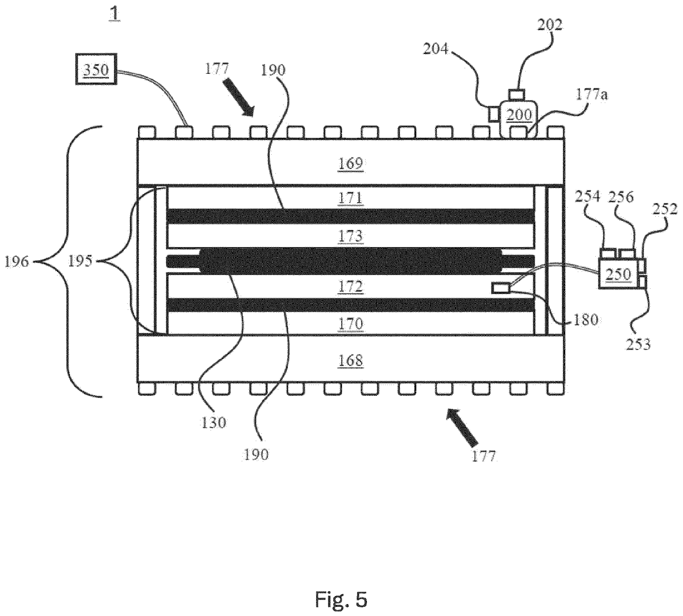

By "conformed," it is meant that the sealant 190 molds to mating interfaces of the two separators 170, 171 and the two structural frames 172, 173 (e.g., to various inner surfaces (not shown) of the two separators 170, 171 and/or the two structural frames 172) to form a seal sufficient to isolate an electro-chemical portion of the cell (e.g., the internal subassembly 100) from an exterior of the two separators 170, 171. The conforming of the sealant 190 may thus be necessary for electrolysis to take place within a completed electrolyzer cell 195 of an electrolyzer stack 196 (FIGS. 5-6; discussed in more detail below). The conforming of the sealant 190 to the mating surfaces of the two separators 170, 171 and/or the two structural frames 172, 173 may thus be necessary for reliable operation of the electrolyzer cell 195 throughout its useful lifetime. If the sealant 190 were to not be properly conformed and/or conditioned, the quality of the seal would deteriorate over time which may lead to an early failure of the device. Additionally, such failure may present itself in a way that creates hazards to the environment in which the electrolyzer cell 195 may operate. A plurality of nuts and/or bolts 177 may connect the various elements of the electrolyzer cell 195 for example, on the end plates 168, 169 and/or on opposite sides of the two separators 170, 171, as shown in FIG. 3.

Turning back to FIG. 3, the system 1 may include a compressor or tensioning device 200 that is removably connectable to the two separators 170, 171, the end plates 168, 169 and/or one or multiple bolts of the plurality of bolts 177. In some embodiments, the tensioning device 200 may be a hydraulic bolt tensioner, as shown in FIG. 3. However, the tensioning device 200 may be any device which one skilled in the art would know and understand to be sufficient to apply pressure to the two separators 170, 171 and/or the two structural frames 172, 173 to compress them towards each other and/or the sealant 190. For example, force could be applied via fluid power (either hydraulics or pneumatics via a press or bolt tensioner), electrical means (electric motor, servo actuator), a displacement limit (where the hardware cannot move and force is generated through expansion forces, e.g., thermal heating or hydration expansion), or gravity (e.g., setting weights on top of the assembly).

In the example, the tensioning device 200 may apply pressure to the two separators 170, 171, the two structural frames 172, 173 and/or the sealant 190 in at least one or both of a first direction A and/or a second direction B. The first direction A may be the direction from a first separator 170 of the two separators 170, 171 towards a second separator 171 of the two separators 170, 171 (e.g., perpendicularly to longitudinal dimensions of separators 170, 171). The second direction B may be a direction from the second separator 171 towards the first separator 170 (e.g., perpendicularly to longitudinal dimensions of separators 170, 171). The compression applied to the two separators 170, 171 and/or the two structural frames 172, 173 may be useful in controlling a creeping or conforming of the sealant 190 to any of the two separators 170, 171 and/or the two structural frames 172, 173 to bind the two separators 170, 171 and the two structural frames 172, 173 together.

In some embodiments, the tensioning device 200 may by itself apply sufficient pressure or compression to effectuate the conforming and/or binding of the sealant 190 to the two separators 170, 171 and/or the two structural frames 172, 173. In further embodiments, such as where the tensioning device 200 is a hydraulic bolt tensioner as shown, the tensioning device 200 may be configured to apply pressure only to a first bolt 177a of the plurality of bolts 177, which may or may not be sufficient to carry out operation of the system as described below, depending on production requirements. In such an embodiment where the single tensioning device 200 is insufficient to conform the sealant 190, a plurality (not shown) of the tensioning device 200 may be used to simultaneously tighten any or all of the plurality of bolts 177, and/or to apply pressure to the two separators 170, 171 and/or the two structural frames 172, 173 to compress the components towards each other and/or to conform the sealant 190 therebetween.

In embodiments, the compressor or tensioning device 200 may include a pressure controller 202 and/or a pressure sensor 204. The pressure controller 202 may be configured to control the tensioning device 200 to actively increase, decrease, or maintain a tensioning, compression and/or pressure applied to the two separators 170, 171 and/or the two structural frames 172, 173 (e.g., to the first bolt 177a) by the tensioning device 200 during operation of the system 1. The pressure sensor 204 may be configured to measure the tensioning, compression or pressure applied to the two separators 170, 171 and/or the two structural frames 172, 173 via the bolt tensioning device 200. In some embodiments, the pressure sensor 204 may be directly attached to or apart of the tensioning device 200. In other embodiments, the pressure sensor 204 may be located on or between the two separators 170, 171 and/or the two structural frames 172, 173. In some embodiments, the pressure tensioning device may further include a pressure release or control valve (not shown) to increase the safety of the system 1 during operation. The pressure control valve may be configured to limit the maximum force and/or pressure that could be exerted by the tensioning device 200. The pressure control valve may be a single or multi-use device that is controlled by a spring, electronically, or by precision bursting of material (e.g., rupture disc).

In some embodiments, the compression and/or pressure applied to the two separators 170, 171, the two structural frames 172, 173, and/or the sealant 190 may be controlled manually, such as by an operator. In such an embodiment, the operator may receive information regarding the compression and/or pressure applied to the two separators 170, 171, the two structural frames 172, 173, and/or the sealant 190 by the pressure sensor 204, and the operator may use that information to regulate the system 1 via the pressure controller 202.

In other embodiments, the pressure controller 202 and/or the pressure sensor 204 may be configured to dynamically, and/or automatically control the tensioning, compression and/or pressure applied to the two separators 170, 171, the two structural frames 172, 173, and/or the sealant 190. By dynamically and/or automatically, it is meant that as changes occur in the system 1 during operation, the system 1 adjusts without input from an operator to regulate and/or maintain optimal process conditions based on feedback received from sensors (e.g., the pressure sensor 204). For example, during operation of the system 1, the sealant 190 may creep or conform to the two separators 170, 171 and/or the two structural frames 172, 173 as the result of compression and/or heating (described in more detail below). As the sealant 190 conforms, the sealant 190 may change shape and/or thickness, which may alter the amount of pressure and/or compression applied to the two separators 170, 171, the two structural frames 172, 173, and/or the sealant 190. As the sealant 190 conforms, the pressure sensor 204 may detect a change in the amount of pressure and/or compression being applied (e.g., to the two separators 170, 171 and/or the two structural frames 172, 173). Upon detecting such a change, the pressure sensor 204 may be configured to send a signal to the pressure controller 202 directing the pressure controller 202 to modify the compression and/or pressure being applied in order to regulate and/or maintain compression within a prescribed range of pressure.

In some embodiments, the tensioning device 200 may also be controlled by sensors monitoring other characteristics of the stack such as measurement of a distance between the two separators 170, 171, between one or both of the two separators 170, 171 and one or both of the two structural frames 172, 173, between one or both of the two separators 170, 171 and one or both of the end plates 168, 169 and/or between various other components mentioned above as the components are pressed towards each other and the distance between those components is measurably changed. In order to prevent damage to certain materials, the rate of compression may have to be controlled. While a force-based compression may still be desirable for optimal product quality, limiting the pressure to account for other phenomenon may be critical.

While the pressure controller 202 is shown in FIGS 3 and 5 as being part of or attached to the tensioning device 200, it is noted that the pressure controller 202 may be a remote device such as a PC, cell phone, or other electronic or analog (e.g., in the case of an operator performing the compression a standard pressure gauge may be used) device capable of sending and receiving signals and/or information remotely.

Consistent regulation of the compression applied to the two separators 170, 171, the two structural frames 172, 173, and/or the sealant 190, either manually or automatically as just described, may be particularly useful in reducing process times during the manufacturing of electrolyzer stacks. Specifically, active control and/or regulation over the compression being applied may reduce the need to cool down the two separators 170, 171, the two structural frames 172, 173, and/or the sealant 190 during manufacture by maintaining the compression and/or load applied thereto within a proscribed range throughout the process. By reducing the need to cool materials during production (e.g., the two separators 170, 171, the two structural frames 172, 173, and/or the sealant 190), the manufacturing times for producing electrolyzer stacks may be greatly reduced. In some cases, the lack of a need to cool components may trim hours or even days off of expected or typical processing times.

With continued reference to FIG. 3, the system 1 may further include a fluid circulation device or fluid pump 250. In embodiments, the fluid pump 250 may be removably connectable to one or both of the two structural frames 172, 173. In the example shown, the fluid pump 250 may be removably connected to a fluid port 180 of the first structural frame 172. The fluid pump 250 may be configured to pump and/or flow fluid (e.g., water) through one or multiple channels and/or the flow field(s) 175, 176 (not shown) of the two structural frames 172, 173 during operation of the system 1. For example, such a channel or flow field may be a channel or flow field (e.g., the flow fields 175, 176) for flowing water through the electrolyzer cell 195 (e.g., internal subassembly 100, FIG. 1) of the electrolyzer stack 196 to electrochemically split the water during operation.

The fluid pump 250 may include a pump controller 252, a flow sensor 254 and/or a temperature or thermal sensor 256. In embodiments, the pump controller 252 may actively control a flow (e.g., a rate of flow of water) of fluid into the fluid port 180 and/or through the one or multiple channels and/or the flow field(s) 175, 176 of the two structural frames 172, 173 during operation of the system 1. Also in embodiments, the pump controller 252 may control a temperature of the fluid flowed through the one or multiple channels and/or the flow field(s) 175, 176. For example, the pump controller 252 may be responsible for heating the fluid which, upon being flowed through the one or multiple channels and/or the flow field(s) 175, 176, transfers heat to the two separators 170, 171, the two structural frames 172, 173, and/or the sealant 190 to facilitate the conforming of the sealant 190 to the two separators 170, 171 and/or the two structural frames 172, 173.

In some embodiments, the fluid pump 250 may also include a filter or set of filters (not shown). During manufacturing (e.g., during operation of the system 1), the filters may filter and/or remove debris and/or contaminants, preventing those materials from being flowed through the one or multiple channels and/or the flow field(s) 175, 176. Following operation of the system 1, the electrolyzer cell 195 may be used for electrolysis. During electrolysis, the filter or set of filters may help to maintain the electrical properties of the circulating fluid, such as by maintaining a high electrical resistance via removing materials which are electrically conductive from the fluid.

In some embodiments, the pump controller 252 may be operated manually, such as by the operator. In such an embodiment, the operator may be fed information regarding the flow rate of the fluid and/or the temperature of the fluid flowing through the one or multiple channels and/or the flow field(s) 175, 176 by the flow sensor 254 and/or the temperature sensor 256, which the operator may use to regulate the system 1. In some embodiments, the operator may regulate the system 1 via the pump controller 252. In other embodiments, the operator 1 may regulate the system in the absence of the pump controller 252 by manually and directly adjusting components of the pump 250 during operation.

In other embodiments, the pump controller 252 may be configured to dynamically, and/or automatically control the flow rate and/or the temperature of the fluid flowed through the one or multiple channels and/or the flow field(s) 175, 176 based on feedback received from the flow sensor 254 and/or the temperature sensor 256 to regulate and/or maintain optimal process conditions. For example, if the temperature sensor 256 senses that the temperature of the fluid being flowed through the one or multiple channels and/or the flow field(s) 175, 176 is lower than optimal temperatures for manufacturing, the temperature sensor 256 may send a signal to the pump controller 252 directing the pump controller 252 to cause a heater 253 to increase the temperature of the fluid. In some embodiments, the pump 250 may act as the heater, or may have the heater (e.g., heater 253) incorporated therein, as shown in FIG. 3. In other embodiments, the heater may be its own, separate component of the system which heats the fluid before and/or as the fluid is flowed through the one or multiple channels and/or the flow field(s) 175, 176.

The heater (e.g., heater 253) must be compatible with and capable of withstanding all contaminants and process conditions (flow, temperature, etc.) present during manufacturing or operation of the system 1, but the specific type of heater may be any heater which one skilled in the art would appreciate as being sufficient to heat the fluid as described (e.g., electrically powered, gas powered, etc.). The size of the heater may be of particular concern. For example, if the heater is too small the process may not be efficient enough to provide an advantage over other systems and methods of manufacturing electrolyzer cells. On the other hand, if the heater is too large the controllability of the system 1 to conform the sealant 190 may be poor. Where the heater is too large, applying too rapid of a temperature change (thermal shock) may cause damage to the various components of the electrolyzer cell 195 described above.

In embodiments, the pump controller 252 may be configured to gradually increase the temperature of the fluid flowed through the system to a process temperature which is within a proscribed range. The proscribed range may be the range of temperatures which best allows for the sealant 190 to creep and/or conform to the two separators 170, 171 and/or the two structural frames 172, 173. The proscribed range of temperatures may be optimized based on design specifications and/or working conditions. The process and equipment need to be capable of efficiently functioning at or above a maximum temperature of the proscribed range of temperatures during operation of the system 1. The material used as a sealant (e.g., the sealant 190) may vary widely and may include rubber, Teflon, or plastic materials that are suited to the application and environment. It's important that the proscribed range of temperatures, and other operating conditions, be tuned properly with the fluid flowed through the one or multiple channels and/or the flow field(s) 175, 176 by the pump 250, as phase changes (freezing/boiling) may expose the electrolyzer cell 195 and/or the various components thereof to conditions that were not designed for, which may cause damage. Sealing materials (e.g., materials used as and/or in the sealant 190) are those that are amenable to the operating conditions of the completed electrolyzer stack 196. The sealing materials (e.g., materials used as and/or in the sealant 190) may therefore have properties such as excellent hydrolytic stability, elastic properties when under pressure, the ability to be easily processed (cut, dispensed, placed etc. as an electrolyzer stack is assembled). Perhaps most important is that the properties of such materials do not change over time throughout the constant temperature and pressure cycling that occurs in an electrolyzer stack (e.g., the electrolyzer stack 195).

While the pump controller 252 is shown in FIGS. 3 and 5 as being part of or attached to the fluid pump 250, it is noted that the pump controller 252 may be a remote device such as a PC, cell phone, or other electronic device capable of storing data, carrying out programmable instructions, and/or sending and receiving signals and/or information remotely.

The process of flowing heated fluid through the one or multiple channels and/or the flow field(s) 175, 176 may be aided by the compression applied to the two separators 170, 171, the two structural frames 172, 173, and the sealant 190 by the tensioning device 200, as described above. As the sealant 190 conforms from the heat and/or compression applied to the two separators 170, 171, the two structural frames 172, 173, and/or the sealant 190, the sealant 190 may change in shape and/or thickness, causing a change in the pressure being applied. The tensioning device 200, via the pressure controller 202 and/or the pressure sensor 204, may detect such a change and compensate, for example, by increasing the pressure until the pressure being applied is within a proscribed range of pressure(s).

The active regulation of the pressure, flow rate and/or thermal profile of the system 1 during manufacture of a subassembly (e.g., internal subassembly 100) of an electrolyzer cell of an electrolyzer stack, as described above, may function to reduce process times to produce electrolyzer stacks by reducing or eliminating the need to cool and reheat components of the system 1. The active regulation thus permits a system (e.g., system 1) for compressing and sealing electrolyzer separator plates to operate for longer periods of time at optimal process temperatures, without damaging any components of the electrolyzer stack being manufactured, which may result in a better, more consistent seal between such components (e.g., the two separators 170, 171, the two structural frames 172, 173 and/or the sealant 190). Additionally, the active regulation of the system 1 as just described may allow for the manufacturing process to be expedited, speeding up processes that occur naturally to be fast enough to enable serial production of electrolyzer cells and/or stacks (e.g., the electrolyzer cell 195 and/or the electrolyzer stack 196).

Advantageously, the present disclosure permits for testing of electrolyzer cells (e.g., the electrolyzer cell 195) and/or stacks (e.g., the electrolyzer stack 196) during manufacture to ensure the electrolyzer stacks are in condition to be used (e.g., during electrolysis) and in compliance with regulatory requirements. For example, after the sealant 190 has conformed to the two separators 170, 171 and/or the two structural frames 172, 173, such that an electrolyzer cell 195 of an electrolyzer stack has been formed from the two separators 170, 171, the two structural frames 172, 173, the sealant 190, and/or the various other components of the internal subassembly 100 (FIG. 1), the electrolyzer cell 195 and/or the electrolyzer stack 196 may be tested to ensure the electrolyzer stack 196 is in operational condition.

**In** embodiments, one test which may be performed on the electrolyzer cell 195 and/or the electrolyzer stack 196 is a leak-check. The leak-check may be performed during manufacture at a variety of pressures and temperatures. In embodiments, the leak check may be performed by forcing fluid (e.g., water) or gas through the one or multiple channels and/or the flow field(s) 175, 176 (not shown) of the electrolyzer cell 195 and/or the electrolyzer stack 196 to determine whether unwanted fluid communication may be present between any of the channels of the one or multiple channels (e.g., between portions of the flow field(s) 175, 176), or between any of the channels (e.g., between portions of the flow field(s) 175, 176) and a space exterior to the electrolyzer cell 195 and/or the electrolyzer stack 196. **In** some embodiments, the fluid or gas may be forced through the one or multiple channels and/or the flow field(s) 175, 176 using the fluid pump 250. **In** other embodiments, a different leak-checking device may be used, the leak-checking device being any such device which one of ordinary skill in the art would appreciate as being able to detect leaking fluid or gas. The proscribed fluid or gas may be pressurized above normal atmosphere.

Additionally, the leak check may be performed across multiple different channels of the one or multiple channels (e.g., fluid paths and/or portions of the flow field(s) 175, 176), and in some embodiments the check between multiple channels may be performed concurrently. By design, the one or multiple channels and/or the flow field(s) 175, 176 may be completely independent, or interconnected with media (e.g., the Membrane Electrode Assembly 140) that will allow for connection. Detection of leaks can be done by a multitude of ways including bubbles per minute, drips per minute, fluid or gas displaced in a given amount of time, mass flow meter, differential pressure, pressure decay, or any other metric which one skilled in the art would know and understand to provide feedback on whether a leak is present. The fluid or gas may be flowed through the one or multiple channels and/or the flow field(s) 175, 176 to check for a leak at various pressures and/or flow rates.

In embodiments, another test which may be performed on the electrolyzer cell 195 and/or the electrolyzer stack 196 is a voltage test, as shown in FIG. 5. The voltage test may be performed during manufacture at a variety of pressures and temperatures. The voltage test may be used to ensure an electrochemical portion (e.g., the internal subassembly 100) of the electrolyzer cell 195 and/or the electrolyzer stack 196 is isolated from the remaining hardware, such as the compression hardware and/or the non-repeating hardware (e.g., the plurality of bolts 177 and/or the end plates 168, 169). Unwanted communication between the electrochemical portion (e.g., the internal subassembly 100) and the remaining and/or non-repeating hardware may present a hazard during operation, such as electrical shorting of the electrolyzer cell 195 and/or the electrolyzer stack 196. Such unwanted communication between the electrochemical portion and the remaining and/or non-repeating hardware may also present a risk of electrocution for persons such as operators of the system 1 who may be nearby the electrolyzer cell 195 and/or the electrolyzer stack 196. For the voltage test, a high-voltage power supply may be used to apply a potential to the electrolyzer cell 195 and/or the electrolyzer stack 196.

Where a voltage test is performed, the system 1 may include a voltage-testing device 350. In some embodiments, the voltage-testing device 350 may include a sensor, such as an amperage meter, to monitor the current being supplied by the power supply. In embodiments, the voltage testing device 350 may further include a controller, transmitter and/or receiver (not shown). The controller may be used to regulate the current and/or voltage applied to the electrolyzer cell 195 and/or the electrolyzer stack 196. The transmitter may transmit an indication of the cell voltage to the controller. The receiver may receive a signal directing the voltage-testing device to increase, decrease, maintain or cease the voltage applied to the electrolyzer cell 195 and/or the electrolyzer stack 196. The voltage-testing device 350 may be removably connectable to various layers of the electrolyzer cell 195 and/or the electrolyzer stack 196. For example, the voltage-testing device 350 may be removably connected to an interior, electrochemical portion (e.g., subassembly 100) of the electrolyzer cell 195 and/or the electrolyzer stack 196 in addition to exterior hardware such as any of the plurality of bolts 177 (e.g., the first bolt 177a). The voltage-testing device 350 may monitor the electrical current traveling between and/or through the various layers to assist in determining whether there is unwanted electrical and/or electrochemical communication between any of the various components of the electrolyzer cell 195 and/or the electrolyzer stack 196. Pass/fail criteria for the voltage test may be based on the maximum current amplitude, rate of change or other measurable change in the electrical stimuli.

Advantageously, the leak-check, the voltage test, and various other tests which one skilled in the art would appreciate as being useful in determining the operational status of the electrolyzer stack or a portion thereof (e.g., the electrolyzer cell 195) may be performed while the electrolyzer cell 195 and/or the electrolyzer stack 196 (e.g., the two separators 170, 171, the two structural frames 172, 173, the sealant 190, and/or the other components of the internal subassembly 100) is still connected to the system 1, such as to the tensioning device 200 and/or the fluid pump 250. Thus, if the electrolyzer cell 195 and/or the electrolyzer stack 196 fails any test(s), such that it is determined that the electrolyzer cell 195 and/or the electrolyzer stack 196 requires further processing, the electrolyzer cell 195 and/or the electrolyzer stack 196 may still be connected to the manufacturing components of the system 1 and may continue to be processed without undue and/or redundant efforts on the part of the operator(s).

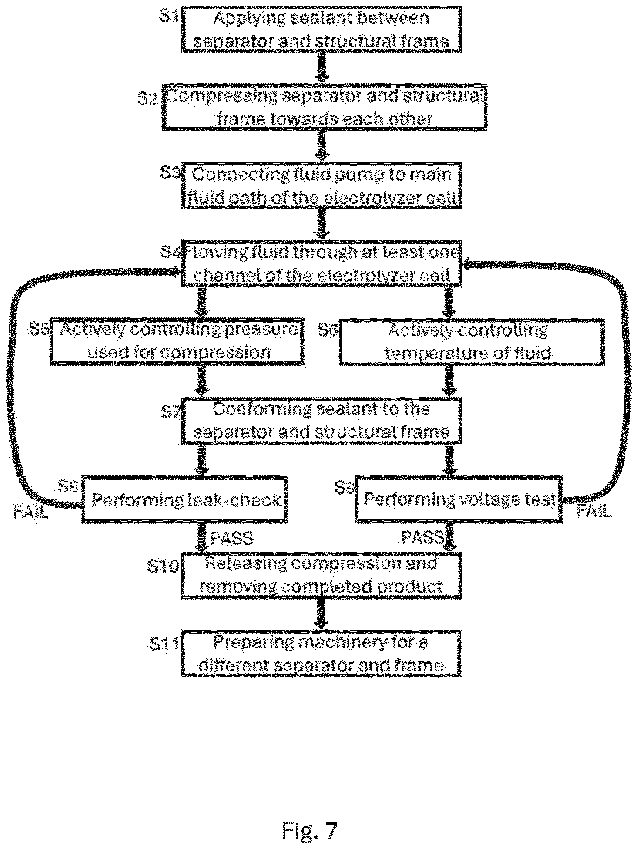

With reference to FIG. 7, a method of the present disclosure will now be discussed. Specifically, the method pertains to operating the system 1 described above. Said another way, disclosed herein is a method for manufacturing and/or sealing an electrolyzer cell (e.g., the electrolyzer cell 195) of an electrolyzer stack (e.g., the electrolyzer stack 196).

In embodiments, the method of the present disclosure may include applying the sealant 190 between the two separators 170, 171 and/or the two structural frames 172, 173, as in Step 1 (S1). The sealant 190 may be applied with the intention of conforming the sealant 190 to the two separators 170, 171 and/or the two structural frames 172, 173 in order to bind them together.

In embodiments, the method may further include compressing the two separators 170, 171 and/or the two structural frames 172, 173 toward each other, as in Step 2 (S2). The two separators 170, 171 and/or the two structural frames 172, 173 may be compressed towards each other and/or towards the sealant 190 to facilitate the conforming of the sealant to the two separators 170, 171 and/or the two structural frames 172, 173 as described above. The tension, pressure and/or compression may be applied to the two separators 170, 171, the two structural frames 172, 173 and the sealant 190 by way of the tensioning device 200, as described above. In the example, the tensioning device 200 may be a hydraulic bolt tensioner, which may be used to tighten one or multiple bolts of the plurality of bolts 177. In some embodiments, the tensioning device 200 may only be able to apply compression to the first bolt 177a and not to the remaining bolts of the plurality of bolts 177. Under such a circumstance, it may be prudent to apply compression using multiple of the tensioning device 200, each of which acting on one bolt of the plurality of bolts 177. In other embodiments, the pressure applied by one of the tensioning device 200 to one or multiple of the plurality of bolts 177 may be sufficient to carry out the method of operating the system 1. In other embodiments, the force or compression may be applied independent of any of the plurality of bolts 177 (such as putting the electrolyzer cell 195 and/or the electrolyzer stack 196 in a hydraulic press). The compressing the two separators 170, 171 and/or the two structural frames 172, 173 towards each other may include setting parameters for active pressure regulation and/or control using the tensioning device 200 (e.g., the pressure controller 202) during manufacturing.

In embodiments, the method may further include connecting the fluid pump 250 to the fluid port 180 to permit the fluid pump 250 to flow fluid through the one or multiple channels and/or the flow field(s) 175, 176 of the two structural frames 172, 173, as in Step 3 (S3).

In embodiments, the method may further include flowing the fluid through the one or multiple channels of the two structural frames 172, 173, as in Step 4 (S4). The flowing of the fluid through the one or multiple channels and/or the flow field(s) 175, 176 may include setting parameters for active regulation and/or control of flow and/or temperature control using the pump controller 252 during manufacturing. In some embodiments, the flowing fluid through the one or multiple channels and/or the flow field(s) 175, 176 may further include gradually increasing the temperature of the fluid to reach a process temperature. The process temperature may be the temperature at which the sealant 190 is best able to conform to the two separators 170, 171 and/or the two structural frames 172, 173 as desired. The process may maintain prescribed temperatures throughout operation and may be able to maintain the desired characteristics within acceptable ranges. This may include actively increasing or decreasing temperatures to best suit the product and/or process. This temperature regulation can be done via heater, chillers, multi-fluid heat exchangers etc.

In embodiments, the method may further include actively controlling the pressure applied to the two separators 170, 171, the two structural frames 172, 173, and the sealant 190 during operation of the system 1, as in Step 5 (S5). In some embodiments, the controlling the pressure may be performed manually, such as by an operator who is fed information from the pressure sensor 204. The operator may regulate and/or control the pressure applied by the system 1 by using the information from the sensor 204 to instruct the pressure controller 202 to modify or maintain the pressure within the proscribed range. Alternatively, the controlling the pressure may be performed automatically and/or dynamically by the pressure controller 202 modifying or maintaining pressure within the proscribed range, as described above with respect to the system 1.

In embodiments, the method may further include actively controlling the temperature and/or flow of fluid through the one or multiple channels and/or the flow field(s) 175, 176, as in Step 6 (S6). In some embodiments, the controlling the temperature and/or flow may be performed manually, such as by an operator who is fed information from the flow sensor 254 and/or the temperature sensor 256. The operator may regulate and/or control the flow rate and/or the temperature of the fluid flowed through the one or multiple channels and/or the flow field(s) 175, 176 by using information from the flow sensor 254 and/or the temperature sensor 256 to instruct the pump controller 252 to modify or maintain the pressure within the proscribed range(s). Alternatively, the controlling the flow rate and/or temperature may be performed automatically or dynamically by the pump controller 252 modifying or maintaining the flow rate and/or temperature of the fluid to be within the proscribed range(s), as described above with respect to the system 1. In some embodiments, the method may include both S5 & S6 to ensure and/or achieve the desired result.

In embodiments, the method may further include conforming the sealant 190 to the two separators 170, 171 and/or the two structural frames 172, 173, as in Step 7 (S7). The conforming the sealant 190 may take place during various other steps of the method. For example, the sealant 190 may be conformed, among other ways, in response to the initial pressure applied to the two separators 170, 171, the two structural frames 172, 173, and the sealant 190 during operation of the system 1. The sealant 190 may also be conformed in response to the heating of the system by the pump controller 250 flowing fluid through the one or multiple channels and/or the flow field(s) 175, 176. At various points during operation of the system 1, the sealant 190 may conform at different rates. In embodiments, the system 1 may be cooled down following the conforming of the sealant 190 to the separators 170, 171 and/or the two structural frames 172, 173. Said another way, the method may include cooling the system 1 following the conforming the sealant 190.

In embodiments, the method may further include performing a leak-check, as in Step 8 (S8). As noted above, the method of the present disclosure advantageously allows for the leak-check to be performed during manufacturing and before the electrolyzer cell 195 and/or the electrolyzer stack 196 is separated or removed from the system 1. The leak-check may also be performed at various pressures, including operational pressures. The performing the leak-check may include forcing fluid (e.g., water) or gas through the one or multiple channels and/or the flow field(s) 175, 176 and determining whether unwanted fluid communication is present between any of the channels of the one or multiple channels (e.g., any portions of the flow field(s) 175, 176), or between any of the channels (e.g., any portion of the flow field(s) 175, 176) and a space exterior to the electrolyzer cell 195 and/or the electrolyzer stack 196. In embodiments, the performing the leak check may include flowing the fluid or gas through the one or multiple channels and/or the flow field(s) 175, 176 using the fluid pump 250. In other embodiments, performing the leak check may include flowing the fluid or gas through the one or multiple channels and/or the flow field(s) 175, 176 using a different leak-checking device that one of ordinary skill in the art would appreciate as being able to detect leaking fluid or gas. The performing the leak check may also include flowing the fluid or gas through the one or multiple channels and/or the flow field(s) 175, 176 to check for leaking fluid or gas at various flow rates.

In embodiments, the method may further include performing a voltage test, as in Step 9 (S9). As noted above, the method of the present disclosure advantageously allows for the voltage test to be performed during manufacturing and before the electrolyzer cell 195 and/or the electrolyzer stack 196 is separated and/or removed from the system 1. The voltage test may also be performed at various pressures, including operational pressures. The performing the voltage test may include connecting the voltage-testing device 350 to any of the various layers of the electrolyzer cell 195 (e.g., layers of the subassembly 100 (FIG. 1)) and/or the electrolyzer stack 196. For example, the performing the voltage test may include connecting the voltage-testing device 350 to an interior, electrochemical portion of the electrolyzer stack 195 in addition to exterior hardware such as any of the plurality of bolts 177 (e.g., the first bolt 177a). The performing the voltage test may further include monitoring the electrical current traveling between and/or through the various layers to determine whether there is unwanted electrical and/or electrochemical communication between any of the various components of the electrolyzer cell 195 and/or the electrolyzer stack 196.

**In** some embodiments, should the electrolyzer cell 195 and/or the electrolyzer stack 196 fail any test performed thereon (e.g., the leak-check and/or the voltage test, among other tests), the method may further include repeating Steps 4-9. Steps 4-9 may be repeated until the electrolyzer cell 195 and/or the electrolyzer stack 196 is deemed and/or determined to be in operating condition. The method may thus include determining whether the electrolyzer stack 195 is in operational condition for use in electrolysis. In other embodiments repair of various components of the electrolyzer cell 195 and/or the electrolyzer stack 196 following a testing failure may require rework prior to the listed S1 step, where the entire sequence would have to be repeated.

In embodiments, the method may further include releasing the compression applied by the tensioning device 200 and removing the completed electrolyzer stack 195, as in Step 10 (S10). In some embodiments, the releasing the compression and removing the completed electrolyzer stack 195 may only occur following a determination that the electrolyzer stack 195 is in operational condition for use in electrolysis.

In embodiments, the method may further include preparing the system 1 to perform the method again using a second set of two separators, a second set of structural frames, and a second sealant (e.g., another of the two separators 170, 171, the two structural frames 172, 173, and the sealant 190). Once the finished electrolyzer cell 195 and/or electrolyzer stack 196 has been removed from the system 1 and before the subsequent stack components have been placed into the system 1, the system 1 may require a servicing and/or cleaning procedure to be performed. In other embodiments no process may be required to prepare the system 1 to seal the next electrolyzer cell 195 and/or electrolyzer stack 196. Regardless, it is imperative that the system 1 be free of contaminates to avoid poisoning subsequently manufactured electrolyzer cells and/or stacks.

As may be recognized by those of ordinary skill in the art based on the teachings herein, numerous changes and modifications may be made to the above-described and other embodiments of the present disclosure without departing from the scope of the disclosure. The components of the system and method as disclosed in the specification, including the accompanying abstract and drawings, may be replaced by alternative component(s) or feature(s), such as those disclosed in another embodiment, which serve the same, equivalent or similar purpose as known by those skilled in the art to achieve the same, equivalent or similar results by such alternative component(s) or feature(s) to provide a similar function for the intended purpose. In addition, systems and methods described herein may include more or fewer components or features than the embodiments as described and illustrated herein. For example, the components and features of FIGS. 3-6 may be used interchangeably and in alternative combinations as would be modified or altered by one of ordinary skill in the art. Further, the systems and methods disclosed herein may also be useful in producing fuel cells in addition to electrolyzer cells as described above. Accordingly, this detailed description of the currently preferred embodiments is to be taken illustratively, as opposed to limiting the disclosure.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has", and "having"), "include" (and any form of include, such as "includes" and "including"), and "contain" (and any form of contain, such as "contains" and "containing") are open-ended linking verbs. As a result, a method or system that "comprises," "has," "includes," or "contains" one or more steps or elements possesses those one or more steps or elements but is not limited to possessing only those one or more steps or elements. Likewise, a step of a method or an element of a device that "comprises," "has," "includes," or "contains" one or more features possesses those one or more features but is not limited to possessing only those one or more features. Furthermore, a device or structure that is configured in a certain way is configured in at least that way but may also be configured in ways that are not listed.

The disclosure has been described with reference to the preferred embodiments. It will be understood that the architectural and operational embodiments described herein are exemplary of a plurality of possible arrangements to provide the same general features, characteristics, and general system operation. Modifications and alterations will occur to others upon a reading and understanding of the preceding detailed description. It is intended that the disclosure be construed as including all such modifications and alterations.

## Claims

1. A method for sealing an electrolyzer cell, the method comprising:
applying a sealant between two layers of an electrolyzer cell;
compressing the two layers towards each other;
flowing fluid through a flow field in the electrolyzer cell;
controlling a temperature of the fluid flowing through the flow field;
controlling a pressure applied to the sealant by the compressing the two layers towards each other; and
conforming the sealant to the two layers by the controlling the temperature and the controlling the pressure.

2. The method of claim 1, wherein the controlling the pressure further comprises automatically controlling the pressure of the compressing the two layers towards each other such that the pressure is maintained within a prescribed range during the conforming the sealant to the two layers.

3. The method of claim 1, wherein the controlling the pressure further comprises automatically controlling the pressure of the compressing the two layers towards each other to control the conforming the sealant to the two layers.

4. The method of claim 1, wherein the compressing the two layers towards each other further comprises compressing the two layers towards each other using a tensioning device, and wherein the method further comprises releasing the tensioning device and removing the two layers from the tensioning device.

5. The method of claim 1, wherein the controlling the temperature of the fluid further comprises gradually increasing the temperature of the fluid to reach a threshold temperature using a heater.

6. The method of claim 4, further comprising the tensioning device receiving a second set of two layers.

7. The method of claim 1, wherein the electrolyzer cell is an electrolyzer cell of an electrolyzer stack, and wherein the method further comprises:
connecting a voltage tester to an electro-chemical portion of the electrolyzer cell;
connecting the voltage tester to a portion of a remainder of the electrolyzer stack, the remainder including any portion of the electrolyzer stack other than the electro-chemical portion; and
measuring an electrical current between the electro-chemical portion and the portion of the remainder.

8. The method of claim 1, further comprising checking for leaking fluid between two portions of the flow field after the compressing the two layers towards each other.

9. The method of claim 8, wherein the checking for leaking fluid further comprises checking for leaking fluid at an operational pressure, the operational pressure being the pressure at which the two layers are intended to function in the electrolyzer cell during electrolysis.

10. The method of claim 1, further comprising checking for leaking fluid or gas between a portion of the flow field and an exterior space surrounding the two layers.

11. The method of claim 10, wherein the checking for leaking fluid or gas further comprises checking for leaking fluid or gas at an operational pressure, the operational pressure being the pressure at which the two layers are intended to function in the electrolyzer cell during electrolysis.

12. A system for sealing an electrolyzer cell, the system comprising:
a fluid pump releasably connectable to a flow field of an electrolyzer cell, the electrolyzer cell including two layers having a sealant therebetween, wherein the fluid pump is configured to flow fluid through the flow field;
a thermal controller configured to control a temperature of the fluid flowed through the flow field; and
a tensioning device releasably connectable to the electrolyzer cell, the tensioning device configured to compress the two layers towards each other while the fluid flows through the flow field and the temperature of the fluid is controlled to conform the sealant between the two layers.

13. The system of claim 12, wherein the tensioning device is further configured to automatically control the pressure applied to the two layers to be within a prescribed range.

14. The system of claim 12, wherein the tensioning device is further configured to automatically control the pressure applied to the two layers to control a conforming of the sealant to the two layers.

15. The system of claim 12, wherein the thermal controller is further configured to gradually increase the temperature of the fluid flowed through the flow field to a threshold temperature.

16. The system of claim 12, wherein the electrolyzer cell is an electrolyzer cell of an electrolyzer stack, and wherein the system further comprises:
a voltage tester releasably connectable to an electro-chemical portion of the electrolyzer cell and to a portion of a remainder of the electrolyzer stack, the remainder of the electrolyzer stack including any portion of the electrolyzer stack other than the electro-chemical portion; and
wherein the voltage tester is configured to measure an electrical current between the electro-chemical portion and the portion of the remainder.

17. The system of claim 12, further comprising a leak-checking device releasably connectable to the flow field and configured to check for fluid leaking between two portions of the flow field.

18. The system of claim 17, wherein the leak-checking device is further configured to check for fluid leaking between the two portions of the flow field at an operational pressure, the operational pressure being at least as much pressure as the two layers are intended to function under within the electrolyzer cell during electrolysis.

19. The system of claim 12, further comprising a leak-checking device releasably connectable to the flow field and configured to check for fluid leaking between any portion of the flow field and an exterior space surrounding the two layers.

20. The system of claim 19, wherein the leak-checking device is further configured to check for fluid leaking between the any portion of the flow field and the exterior space at an operational pressure, the operational pressure being at least as much pressure as the two layers are untended to function under within the electrolyzer cell during electrolysis.
